(19) Europäisches Patentamt
European Patent Office
Office européen des brevets

(11) Publication number : **0 522 703 A2**

(12) # EUROPEAN PATENT APPLICATION

(21) Application number : **92304990.2**

(22) Date of filing : **01.06.92**

(51) Int. Cl.$^5$ : **C08G 59/68,** C08G 77/38, C08K 5/13, C09D 183/04

(30) Priority : **04.06.91 US 710266**

(43) Date of publication of application : **13.01.93 Bulletin 93/02**

(84) Designated Contracting States : **DE DK FR GB NL SE**

(71) Applicant : **GENERAL ELECTRIC COMPANY**
**1 River Road**
**Schenectady, NY 12345 (US)**

(72) Inventor : **Eckberg, Richard Paul**
**10 Fifth Avenue**
**Saratoga Springs, New York 12866 (US)**
Inventor : **O'Brien, Michael Joseph**
**2 Maple Ridge Avenue**
**Clifton Park, New York 12065 (US)**

(74) Representative : **Pratt, Richard Wilson**
**London Patent Operation G.E. Technical Services Co. Inc. Essex House 12/13 Essex Street**
**London WC2R 3AA (GB)**

(54) **Diluent for iodonium photocatalysts.**

(57) A photocatalyst composition is provided for use in UV-curable epoxysilicone compositions, comprising by weight (A) a bis(aryl)iodonium salt photocatalyst or certain polyarylonium hexafluorometal or metalloid salts ; and (B) a reactive diluent comprising an organic phenol, preferably, 4-dodecylphenol and preferably further comprising an epoxyfunctional organic compound, preferably, 1,2-epoxydodecane, wherein the weight ratio of 4-dodecylphenol :1,2-epoxydodecane is from about 9 :1 to about 1 :9, and also preferably further containing a photosensitizer. An ultraviolet-curable silicone composition comprising the photocatalyst composition described above and an epoxy-functional silicone polymer, as well as methods for providing improved iodonium photocatalyst compositions and epoxysilicone compositions using the reactive diluent, are also disclosed.

EP 0 522 703 A2

Background of the Invention

The present invention relates to diluents for iodonium photocatalysts. More particularly, the present invention relates to diluents for iodonium photocatalysts used in UV-curable epoxysilicone compositions.

UV-curable epoxysilicone compositions are known in the art. Reference is made, for example, to U.S. Patent Nos. 4,279,717; 4,421,904; 4,977,198; 4,576,999; 4,952,657; and 5,010,118. UV-curable epoxysilicone compositions are generally combined with onium salt photocatalysts in order to effect UV cure.

The onium salt photocatalysts in UV-curable epoxysilicone compositions are preferably dispersed in a reactive diluent in order to enhance the onium salt's miscibility with or solubility in the epoxysilicone polymer. Insufficient miscibility of the onium salt with the epoxysilicone can result in the formation of a heterogeneous curable coating mixture having a tendency to readily smear or streak after being subjected to curing conditions on the surface of a suitable substrate, such as plastic or paper.

Diluents for use with iodonium photocatalysts in UV-curable epoxysilicone compositions should have certain characteristics. The diluent should be non-hazardous, i.e., it should be non-toxic and have a high flashpoint. The diluent should be freely miscible with both the onium catalyst and the epoxysilicone polymers making up the UV-curable composition Furthermore, the diluent should be capable of "curing in" (i.e., reacting with the epoxy groups of the epoxysilicone so that it is chemically linked to the crosslinked epoxysilicone coating) to the crosslinked epoxysilicone coating. This latter property is particularly important for release coating applications where migration of uncured material from release liners to adhesives can reduce adhesive tack.

UV-curable cationic epoxy compositions can be co-cured with other organic epoxies, vinyl ethers, phenols, and alcohols, among other species. This means that a broad range of potential reactive diluents exists which can be considered as potential vehicles for onium photocatalysts such as bis(aryl)iodonium salts. A diluent which is presently used with bis(aryl)iodonium salts is 2-ethyl-1,3-hexanediol, which is an acceptable reactive diluent for bis(aryl)iodonium salts due to the free miscibility of the 2-ethyl-1,3-hexanediol with bis(alkylated aryl)iodonium salts, as well as the high flash point (i.e., greater than 200°F), and polyol nature of the 2-ethyl-1,3-hexanediol which permits it to readily co-cure with the epoxy silicones.

However, catalyst solutions containing bis(aryl)iodonium photocatalysts and 2-ethyl-1,3-hexanediol have several drawbacks. For example, solutions of bis(aryl)iodonium salts in alcohols or polyols are thermally unstable, which makes it necessary to refrigerate catalyst solutions containing them. Furthermore, 2-ethyl-1,3-hexanediol is a weak teratogen requiring special handling precautions.

It is therefore desirable to provide iodonium photocatalyst compositions which are thermally stable and reactive diluents for iodonium photocatalyst compositions which do not require special handling precautions.

It is also continually desirable to reduce the cost of UV-curable epoxysilicone polymers and to reduce crosslink density. However, reduced cost of UV-curable epoxysilicone polymers and reduced crosslink density can only be achieved by reducing epoxy content. It has been found that while catalyst solutions containing an iodonium photocatalyst and 2-ethyl-1,3-hexanediol are freely miscible in epoxysilicones having an epoxy equivalent weight of less than 1000 and in other, more polar organofunctionally-modified epoxysilicones, such catalyst solutions are only partially miscible in epoxysilicones having an epoxy equivalent weight of more than 1000 or other organofunctional epoxysilicones having lower epoxy concentration.

It is therefore further desirable to provide an iodonium photocatalyst composition which have greater miscibility with epoxysilicone polymers having lower epoxy content.

It is continually desirable to provide photocatalyst solutions having improved shelf-stability and increased UV-cure efficiency. It is additionally desirable to provide UV-curable epoxysilicone compositions having improved release properties and increased UV-cure efficiency.

The present invention is based on the discovery that a reactive diluent containing certain organic phenols and, optionally, further containing an epoxyfunctional organic compound and certain photosensitizers, will improve the shelf stability, iodonium salt catalyst/epoxysilicone miscibility, and overall system performance of a UV curable epoxysilicone release composition.

The use of organic phenols in combination with epoxysilicones and certain polyarylionium salts is disclosed in U.S. Patent No. 5,010,118 (Desorcie et al.), which discloses a curable mixture of an epoxysilicone, a compatibilizer containing a mixture of an alkyl phenol and an alkanediol, and a polyaryloniumhexafluorometal, or metalloid salt, substituted with at least one nuclear bound alkoxy radical having at least 8 carbon atoms selected form the class consisting of diaryliodonium salts and triarylsulfonium salts. The patent to Desorcie et al. does not disclose the bis(aryl)iodonium salts used in this invention and having formula (I) below, nor does the Desorcie et al. patent disclose the use of an epoxyfunctional organic compound or a photosensitizer.

Summary of the Invention

Accordingly, one embodiment of the present invention is a photocatalyst composition for use in UV-curable epoxysilicone compositions, comprising by weight:

(a) from about 10 to about 90 parts of a bis(aryl)iodonium salt photocatalyst having the following formula

(I)

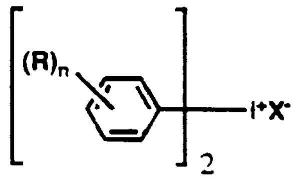

wherein X is selected from the group consisting of $SbF_6$, $AsF_6$, $PF_6$, and $BF_4$, and wherein R is a $C_{(4-20)}$organo radical selected from the group consisting of alkyl and haloalkyl radicals and mixtures thereof and n is a whole number equal to 1 to 5 inclusive; and

(b) from about 90 to about 10 parts of a reactive diluent comprising

(i) an organic phenol having the general formula

(II)

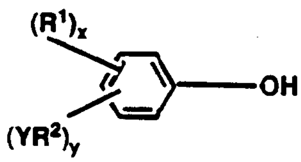

wherein $R^1$ is a monovalent non-aromatic organic radical; $R^2$ is a divalent non-aromatic organic radical; Y is a radical selected from halogens, hydroxy radicals, oxiranyl radicals, or mercaptan radicals; "x" is a number in the range of from 1 to 5; "y" is a number in the range of from 0 to 4; the sum of "x"+"y" being 5 and the sum of (a) and (b) being 100 parts; and

(ii) optionally, an epoxyfunctional organic compound having from about 4 to about 20 carbon atoms and at least one epoxy radical, the epoxyfunctional organic compound being present in an amount ranging from zero parts to an amount sufficient to provide a weight ratio of organic phenol to epoxyfunctional organic compound of 9:1 to 1:9, the sum of (a) and (b) being 100 parts; and

(c) optionally, from about 0.1 to about 25 parts per 100 parts of (a) and (b) of a photosensitizer which is a benzophenone or diaryl ketone derivative thereof.

In another embodiment, the present invention is directed to photocatalyst compositions containing non-toxic polyarylonium hexafluorometal, or metalloid salts, substituted with at least one nuclear bound alkoxy radical having at least 8 carbon atoms selected from the class consisting of diaryliodonium salts and triarylsulfonium salts.

In still other embodiments, the present invention is directed to ultraviolet radiation-curable and cured epoxysilicone compositions comprising epoxyfunctional silicones and the photocatalyst compositions described hereinabove as well as to methods for providing improved photocatalyst/reactive diluent compositions and improved UV-curable epoxysilicone compositions. The UV-curable compositions of this invention are curable to form release coatings for pressure sensitive adhesives. The present invention is also directed to articles containing substrates coated with the compositions of this invention.

The reactive diluents used in this invention provide photocatalyst compositions having greater miscibility with epoxysilicone polymers, improved shelf-stability, and greater UV cure efficiency. UV-curable epoxysilicone compositions containing the photocatalyst compositions of this invention have improved UV cure efficiency and cure to provide cured compositions having improved release performance.

Detailed Description of the Invention

One embodiment of the present invention provides a photocatalyst composition for use in UV-curable epoxysilicone compositions, comprising (A) a bis(aryl)iodonium salt photocatalyst and (B) a reactive diluent comprising an organic phenol.

The bis(aryl)iodonium salt photocatalyst is present in the photocatalyst composition in an amount within the range of from about 10 to about 90, preferably from about 25 to about 75, and most preferably from about 40 to about 60, parts by weight. The reactive diluent is present in the photocatalyst composition in an amount within the range of from about 90 to about 10, preferably from about 75 to about 25, and most preferably from about 60 to about 40, parts by weight.

The bis(aryl)iodonium salt useful in the present invention has the general formula

(I)

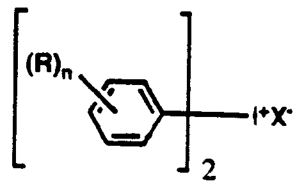

wherein X is selected from the group consisting of $SbF_6$, $AsF_6$, $PF_6$, and $BF_4$, and wherein R is a $C_{(4-20)}$organo radical selected from the group consisting of alkyl and haloalkyl radicals and mixtures thereof and n is a whole number equal to 1 to 5 inclusive. The preferred bis(aryl)iodonium salt for use in this invention has the formula

(III)

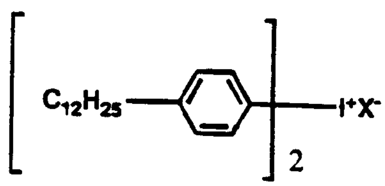

wherein X is $SbF_6$, $AsF_6$, $PF_6$, or $BF_4$. Most preferably, X represents $SbF_6$. These iodonium salts, which are called bis(4-dodecylphenyl)iodonium salts, are effective initiators for the UV cure of a wide range of epoxy functional silicones. Bis(4-dodecylphenyl)iodonium salts are disclosed, for example, in U.S. Patent No. 4,279,717 (Eckberg et al.), which is hereby incorporated by reference herein.

The bis(4-dodecylphenyl)iodonium salts of formula (III) above are known commercially and can be prepared from Friedel-Kraft alkylated benzene with a $C_{11}$-$C_{13}$ alpha-olefin cut. Consequently, the alkylate contains a preponderance of branched chain dodecylbenzene, but there may, in fact, be large amounts of other isomers of dodecylbenzene such as ethyldecylbenzene, plus isomers of undecylbenzene, tridecylbenzene, and the like.

The reactive diluent used in the photocatalyst composition of this invention contains (b)(i) an organic phenol of the general formula:

(II)

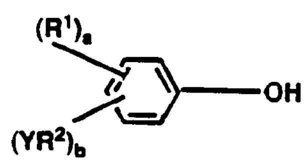

wherein $R^1$ is a monovalent non-aromatic organic radical; $R^2$ is a divalent non-aromatic organic radical; Y is a radical selected from halogens, hydroxy radicals, oxiranyl radicals, or mercaptan radicals; a is a number in the

range of from 1 to 5; b is a number in the range of from 0 to 4; and the sum of a+b is 5.

Examples of radicals represented by $R^1$ in formula (II) above include alkyl radicals, e.g., methyl, ethyl, and the like; alkenyl radicals. e.g., vinyl, allyl and the like; alkynyl radicals; cycloalkyl radicals; and the like. Preferably, $R^1$ represents an alkyl radical having from 3 to about 20 carbon atoms, and most preferably $R^1$ represents an alkyl radical having 12 carbon atoms, i.e., a dodecyl radical.

Examples of radicals represented by $R^2$ in formula (II) above include alkylene radicals, e.g., methylene, ethylene, and the like; unsaturated divalent hydrocarbon radicals, cycloalkylene radicals; and the like.

In formula (II), Y represents a halogen, a hydroxy radical, an oxiranyl radical, or a mercaptan radical.

In formula (II), "a" preferably represents the number 1 and "b" preferably represents 0. It is also preferred that in formula (II), the hydroxy radical and the $R^1$ radical be present on the benzene ring in the para position with respect to one another.

Thus, the preferred organic phenol for use in this invention is 4-dodecylphenol, which has the formula

(IV)

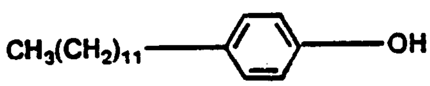

Although the organic phenols described hereinabove are superior reactive diluents for $(C_{12}H_{25}Ph)_2ISbF_6$ compared to the presently used 2-ethyl-1,3-hexanediol in terms of promoting faster cure, better miscibility, and improved shelf-life, the organic phenols, particularly 4-dodecylphenol, have certain drawbacks. For example, although 4-dodecylphenol is not a known teratogen, its phenolic character renders it a severe skin irritant, requiring proper handling of iodonium catalyst compositions containing 4-dodecylphenol so as to avoid direct contact with skin or eyes. In addition, the high viscosity of iodonium catalyst compositions containing 4-dodecylphenol, particularly when cold (e.g., refrigerated or outside storage during winter) is a drawback. A batch of photocatalyst solution containing 40 to 50 weight % $(C_{12}H_{25}Ph)_2ISbF_6$ in 4-dodecylphenol typically has a viscosity of 3450 centipoise at 25°C and a viscosity of more than 100,000 centipoise at 5°C. In contrast, a batch of photocatalyst solution containing $(C_{12}H_{25}Ph)_2ISbF_6$ and 2-ethyl-1,3-hexanediol has a viscosity of 355 centipoise at 25°C and a viscosity of 4500 centipoise at 5°C.

It has been found that a reactive diluent containing the organic phenol and certain epoxyfunctional organic compounds will yield photocatalyst compositions having reduced viscosity without compromising the excellent solubility, shelf-life, and performance characteristics associated with 4-dodecylphenol.

Therefore, in preferred embodiments, the organic phenol in the reactive diluent of in this invention is used in combination with an epoxyfunctional organic compound (i.e., epoxide) containing from about 6 to about 18 carbon atoms. The weight ratio of organic phenol to epoxide is about 9:1 to about 1:9, preferably 5:1 to about 1:5, and most preferably about 3:1.

Epoxides useful in the present invention include alkylepoxides, cycloalipahtic epoxides, allyl- or vinyl-functional epoxides, and glycidyl ethers, e.g., 1,2-epoxy-4-oxo-undecane. The epoxide may contain more than 1 epoxide group. The epoxy radical or radicals may be present on the terminal part of the chain or on the backbone of the chain.

Preferably, the epoxide used in this invention is an epoxy-chainstopped alkyl compound having from about 6 to about 18 carbon atoms. Most preferably, the epoxide used in this invention is 1,2-epoxydodecane.

Preferably, the photocatalyst composition further contains a photosensitizer which is a benzophenone or diaryl ketone derivative thereof.

The photosensitizer increases the effectiveness of the photocatalyst by absorbing light at a wavelength which has little or no effect on the catalyst and releasing the absorbed energy to the iodonium photocatalyst. Thus, the use of the photosensitizer results in better use of the energy available from the light source.

Examples of suitable photosensitizers are disclosed, for example, in U.S Patent No. 4,816,496 (Wada et al.), which is hereby incorporated by reference herein, and include aromatic hydrocarbons, benzophenone and derivatives thereof, esters of o-benzoylbenzoic acids, acetophenone and derivatives thereof, benzoin and benzoin ethers and derivatives thereof, xanthone and derivatives thereof, thioxanthone and derivatives thereof, quinone compounds, halogenated hydrocarbons, amines, and the like. The preferred photosensitizers for use in this invention are thioxanthone and its derivatives, and most preferably, isopropylthioxanthone.

When used, the photosensitizer is present in the compositions of this invention in an amount within the range of 0.1 to about 25, preferably from about 1.0 to about 10.0, and most preferably from about 3.0 to about 6.0 parts by weight based on the weight of bis(dodecylphenyl)iodonium-hexafluoroantimonate.

If used, the photosensitizer must be used in the amounts recited hereinabove. Lower amounts will be ineffective, while excessive amounts can adversely affect performance by absorbing too much UV light and thereby preventing complete cure beneath the coating surface.

In another embodiment of this invention, the onium salt used is a polyarylonium hexafluorometal, or metalloid salt, substituted with at least one nuclear bound alkoxy radical having at least 8 carbon atoms selected from the class consisting of diaryliodonium salts and triarylsulfonium salts. These salts are taught, for example, in U.S. Patent No. 5,010,118 (Desorcie et al.), which is hereby incorporated by reference herein. These salts are not preferred because their efficient use requires a significantly higher amount of reactive diluent than is required by the bis(aryl)iodonium salts discussed previously herein. The amount of reactive diluent required for the polyarylonium salts is about 10 to about 95, preferably from about 50 to about 90, and most preferably from about 75 to about 90, parts by weight, the sum of the reactive diluent and the onium salt being 100 parts by weight. Accordingly, the amount of the polyarylonium salt used will be from about 5 to about 90, preferably from about 10 to about 50, and most preferably from about 10 to about 25, parts by weight, the sum of the parts of diluent and polyarylonium salt being 100 parts by weight.

The photocatalyst compositions of this invention can be prepared by blending at a temperature of about 50°C-60°C, the iodonium salt, the organic phenol, and, if present, the epoxyfunctional organic compound and the photosensitizer, until a uniform mixture is formed.

Another aspect of the present invention is directed to an ultraviolet-curable epoxysilicone composition having improved shelf-stability and improved miscibility with low epoxy-content epoxysilicones, comprising by weight:

(A) 100 parts of an epoxy-functional dialkylepoxy-chainstopped polydialkyl-alkyl epoxy siloxane copolymer having an epoxy equivalent weight of 1000 or above and a viscosity of from about 10 to about 10,000 centipoise at 25°C; and

(B) from about 0.5 to about 5.0 parts of the photocatalyst composition described above.

The epoxyfunctional polydiorganosiloxane fluids useful in the present invention are disclosed in U.S. Patent No. 4,279,717 (Eckberg et al.), which was hereinabove incorporated by reference herein. The epoxyfunctional silicones used in this invention are dialkylepoxy chainstopped polydialkylalkyl-epoxysiloxane copolymers wherein the polysiloxane units contain lower alkyl substituents, preferably, methyl groups. The epoxy functionality is obtained when certain of the hydrogen atoms on the polysiloxane chain of a polydimethyl-methylhydrogensiloxane copolymer are reacted in a hydrosilation addition reaction with other organic molecules which contain both ethylenic unsaturation and epoxide functionality. Ethylenically unsaturated species will add to a polyhydroalkylsiloxane to form a copolymer in the presence of catalytic amounts of platinum or rhodium complex catalyst. If the ethylenically unsaturated species is polyfunctional, such as a linear dimethylsilicone chainstopped with dimethylvinylsiloxy groups, the hydrosilation reaction can be the cure mechanism of a silicone composition. In the present invention, a controlled amount of this crosslinking is permitted to take place in a silicone precursor fluid or intermediate; this is referred to as "pre-crosslinking". "Pre-crosslinking" of a precursor silicone SiH fluid means that a partial crosslinking of the composition has occurred prior to incorporation of reactive epoxide functionality via hydrosilation addition of the olefin epoxide.

The ultraviolet curable epoxy functional silicone intermediate fluid comprises a pre-crosslinked epoxy functional dialkyl epoxy chainstopped polydialkyl-alkyl epoxy siloxane copolymer silicone fluid which is the reaction product of a vinyl- or allylic-functional epoxide and a vinyl functional siloxane crosslinking fluid having a viscosity of approximately 1 to 100,000 centipoise at 25°C with an SiH-containing polydimethyl-methylhydrogensiloxane copolymer containing 0.05 to 0.25 % by weight reactive hydrogen in the presence of an effective amount of a precious metal catalyst for facilitating an addition cure hydrosilation reaction between the vinyl functional crosslinking fluid, vinyl functional epoxide, and hydrogen functional siloxane precursor fluid.

The vinyl- or allylic-functional epoxide may be a cycloaliphatic epoxy compound such as 4-vinylcyclohexeneoxide, vinylnorbornenemonoxide, and dicyclopentadienemonoxide.

The precious metal catalyst can be selected from the group of platinum-metal complexes which includes complexes of ruthenium, rhodium, palladium, osmium, iridium, and platinum.

The vinyl functional siloxane crosslinking fluid can be selected from the group consisting of dimethylvinyl chain-stopped linear polydimethylsiloxane, dimethylvinyl chain-stopped polydimethyl-methylvinyl siloxane copolymer, tetravinyltetramethyl-cyclotetrasiloxane and tetramethyldivinyldisiloxane. The hydrogen functional siloxane precursor fluid can be selected from the group consisting of tetrahydrotetramethylcyclotetrasiloxane, dimethylhydrogen chain-stopped linear polydimethylsiloxane, dimethylhydrogen chain-stopped polydimethyl-methyl-hydrogen siloxane copolymer and tetramethyldi hydrodisiloxane.

The UV-curable composition of this invention may further contain from about 5 to about 25 parts by weight of a reinforcing or extending filler.

The UV-curable composition of this invention is prepared by blending the epoxy functional silicone fluid with the photocatalyst composition until a uniform dispersion of the photocatalyst composition within the silicone

is obtained. When the above-described epoxy functional silicones are combined with the photocatalyst compostion of the present invention, a crosslinking (or cure) reaction can be initiated with ultraviolet light in order to form a final product such as a solventless silicone release coating.

The present invention is further directed to a method for improving UV cure efficiency and release performance (i.e., lower and more stable release) of epoxysilicone coatings, particularly those with reduced epoxy content, comprising the step of combining (1) 0.5 to 5.0 pans by weight of the bis(aryl)iodonium salt photocatalyst solution described hereinabove: with (2) 100 parts of the epoxy-functional polydimethylsiloxane polymer.

The UV curable epoxy functional silicone compositions of the present invention can then be applied to cellulosic and other substrates including paper, metal, foil, glass, PEK paper, SCK paper, and polyethylene, polypropylene, and polyester films. A UV initiated reaction will cure the epoxy functional silicone composition of the present invention to form a final product such as a silicone release coating, which will provide a non-adherent, abhesive surface on a substrate on which it is coated.

In order that those skilled in the art will be better able to practice the present invention, the following examples are given by way of illustration and not by way of limitation. All parts and precentages are by weight, unless otherwise noted.

## Experimental

Examples 1-7 illustrate the stability of iodonium salt solutions containing various organic solvents or reactive diluents including 4-dodecylphenol.

Thermal or UV-initiated decomposition of bis-aryliodonium salts results in the formation of strong acids, the strength of which depends on the particular anion used. The anion in the iodonium salt $(C_{12}H_{25}Ph)_2ISbF_6$ is $SbF_6^-$. Hydrolysis of the $SbF_6^-$ anion results in the formation of titratable HF. The thermal or UV-initiated decomposition of bis-aryliodonium salts and the hydrolysis of the $SbF_6^-$ anion are both catalyzed by acid, making these reactions autocatalytic. These reactions are also thermally accelerated. Residual acid from iodonium catalyst synthesis is present in the iodonium salt solutions containing 2-ethyl-1,3-hexanediol and its concentration normally increases as the solution ages. High acid concentration in iodonium salt solutions results in loss of UV cure activity and catalyzed bath life of UV curable epoxysilicone compositions containing the salt solutions.

In Examples 1-7 below, the stability of iodonium salt solutions containing various reactive diluents was determined by noting the relative amounts of acid generated by iodonium salts dispersed in the diluents in high concentrations, particularly at elevated temperature.

## Examples 1-7

Seven 50 weight % solutions of (4-octyloxyphenyl)phenyliodonium hexafluoroantimonate (OPPI) were prepared in several different organic diluents, as shown in Table 1 below.

The seven solutions were aged at 80°C in opaque, sealed containers for 1 week. The acid generated was determined by titre and reported as ppm HCl. The results are shown in Table 1 below.

### TABLE 1: Examples 1-7: Stability

| Example No. | Solvent | ppm Acid (as HCl) |
|---|---|---|
| 1 | Butyrlnitrile | 0 |
| 2 | Ethylbenzene | 4 |
| 3 | 3-Pentanone | 7 |
| 4 | Dodecylphenol | 15 |
| 5 | 2-Butanol | 165 |
| 6 | 2-Ethyl-1,3-hexanediol | 199 |
| 7 | 1-Butanol | 305 |

According to the data shown in Table 1 above, primary and secondary alcohols promote instability of iodonium salts. Of the other solvents, only the phenol would be expected to cure into a cationically-crosslinked epoxy system.

Example 8 and Comparison Examples A and B

Three solutions of $(C_{12}H_{25}Ph)_2ISbF_6$ were prepared. The organic solvent used in one solution was 4-dodecylphenol and the organic solvent used in the other two solutions was 2-ethyl-1,3-hexanediol. The concentration of $(C_{12}H_{25}Ph)_2ISbF_6$ was the same in all three solutions. The solution containing 4-dodecylphenol in Example 8 had a Sb content of 6.5% and an initial acid content of 0. The solution prepared in Comparison Example A had an Sb content of 6.7% and an initial acid content of 50 parts per million (ppm) of titrable acid reported as ppm HCl. The solution prepared in Comparison Example B had an Sb content of 6.2% and an initial acid content of 240 parts per million (ppm) of titrable acid reported as ppm HCl.

Examples 9-11 and Comparison Examples C-G

The stability of the solutions prepared in Example 8 and Comparison Examples A and B was measured and compared by noting the amount of acid generated by the two solutions as a function of aging at 3 different temperatures for 6.5 weeks. The results are presented in Table 2.

TABLE 2
Examples 9-11 and Comparison Examples C-G:
Stability

| Example No. | Diluent | Temp. °C | Acid Detected After 6.5 weeks (as ppm HCl) |
|---|---|---|---|
| C | 2-ethyl-1,3-hexanediol | 4°C | 45 |
| 9 | 4-dodecylphenol | 4°C | 40 |
| D | 2-ethyl-1,3-hexanediol | 25°C | 75 |
| 10 | 4-dodecylphenol | 25°C | 50 |
| E | 2-ethyl-1,3-hexanediol | 25°C | 700 |
| F | 2-ethyl-1,3-hexanediol | 54°C | 680 |
| 11 | 4-dodecylphenol | 54°C | 300 |
| G | 2-ethyl-1,3-hexanediol | 54°C | 6448 (2 weeks aging) |

The data presented in Table 2 demonstrate that 4-dodecylphenol provides substantial improvement in photocatalyst stability, particularly at elevated temperature, when substituted for 2-ethyl-1,3-hexanediol.

Examples 12-16 and Comparative Examples H-K

Examples 12-16 and Comparative Examples H-K illustrate the greater solubility in epoxy-functional silicones, specifically epoxy-functional silicones having lower epoxy content, of 4-dodecylphenol solutions as compared to that of 2-ethyl-1,3-hexanediols.

Mixtures containing 3 parts of photocatalyst solution and 100 parts of an epoxysilicone were prepared in Examples 12-16 and Comparative Examples H-K. The photocatalyst solutions used in Examples 12-16 contained 4-dodecylphenol and were prepared as described in Example 8. The photocatalyst solutions used in Comparative Examples H-K contained 2-ethyl-1,3-hexanediol and were prepared as described in Comparative Example A.

The epoxy equivalent weight (i.e., EEW) of the epoxysilicones present in the mixtures prepared in Examples 12-16 and Comparison Examples H-K varied as indicated in Table 3 below.

The solubility of the photocatalyst solutions in the epoxysilicones was determined by visual observation of the photocatalyst solution/epoxysilicone polymer mixtures. A clear appearance indicates good miscibility while a hazy appearance indicates lower or little miscibility. The solubility results for Examples 12-16 and Comparison Examples H-K are shown in Table 3 below.

TABLE 3

Examples 12-16 and Comparison Examples H-K: Solubility Data

| Example No. | Diluent | EEW | Remarks |
|---|---|---|---|
| 12 | 4-dodecylphenol | 860 | Clear, Stable Mix |
| Comp. H | 2-ethyl-1,3-hexanediol | 860 | Clear, Stable Mix |
| 13 | 4-dodecylphenol | 1000 | Clear, Stable Mix |
| Comp. I | 2-ethyl-1,3-hexanediol | 1000 | Hazy Mixture, but stable on standing |
| 14 | 4-dodecylphenol | 1200 | Clear, Stable Mix |
| Comp. J | 2-ethyl-1,3-hexanediol | 1200 | Very Hazy Mixture, catalyst separated out on standing more than 8 hours |
| 15 | 4-dodecylphenol | 1400 | Hazy Mixture, stable on standing |
| Comp. K | 2-ethyl-1,3-hexanediol | 1400 | Very Hazy Mixture-Catalyst settled out rapidly |
| 16 | 4-dodecylphenol | 1600 | Very Hazy Mixture-Catalyst separated out on standing |

Not surprisingly, the superior solubility of the photocatalyst solution containing 4-dodecylphenol contributes to a prompter UV-cure response. Example 17 and Comparative Example L below illustrate this phenomena.

Example 17 and Comparative Example L

Two photocurable compositions containing 1.0 weight % photocatalyst solution and epoxysilicone polymer were prepared. The photocatalyst solution in Example 17 contained $(C_{12}H_{25}Ph)_2ISbF_6$ and 4-dodecylphenol. The photocatalyst solution in Comparative Example L contained $(C_{12}H_{25}Ph)_2ISbF_6$ and 2-ethyl-1,3-hexanediol. The two photocurable compositions were then cured as 0.5 mil thick coatings on polyethylene. The minimum UV flux required to convert these coatings to smear and migration-free coatings was determined as follows:

The photocurable composition containing 2-ethyl-1,3-hexanediol as the reactive diluent required 50 $mJ/cm^2$ to cure. The photocurable composition containing 4-dodecylphenol as the reactive diluent required 41 $mJ/cm^2$ to cure.

Simple substitution of 4-dodecylphenol for 2-ethyl-1,3-hexanediol resulted in a 20% decrease in UV flux

needed for cure of these 0.5 mil coatings.

Example 18 and Comparison Example M

Two UV-curable epoxysilicone coating baths were prepared. Bath "A" contained 100 parts of an epoxyfunctional silicone of epoxy equivalent weight of about 1000 and 3 parts of a photocatalyst solution containing $(C_{12}H_{25}Ph)_2ISbF_6$ and 2-ethyl-1,3-hexanediol. Bath "B" contained 100 parts of the same epoxyfunctional silicone and 3 parts of a photocatalyst solution containing $(C_{12}H_{25}Ph)_2ISbF_6$ and a 3:1 weight ratio of 4-dodecylphenol:1.2-epoxydodecane. The baths were applied at 1.2 pounds/ream coat weight (1.9 grams/m$^2$) onto a Nicolet RL250 supercalendered Kraft release liner using a 3 roll offset gravure pilot coater (18 inch web) at 400 fpm line speed. Cure was effected by exposure to two 300 watt/inch focused microwave-fired Fusion Systems 'H' lamps (mercury vapor sources). In each case, smear- and migration-free coatings were obtained immediately off-line. Cured coatings were subsequently laminated with Gelva® 263 (trademark registered to Monsanto) solvent-borne acrylic adhesive plus a standard supercalendered Kraft top sheet. Two-inch wide tapes were cut from this laminate structure, and the force (in grams) required to separate the silicone/release liner lamina from the adhesive/face stock lamina at 400 ipm pull (180°C) were determined as a function of aging at 25°C. The results are shown in Table 4 below.

TABLE 4
Example 19 and Comparison Example M:
Release Properties

| Example No. | 1 Day | 1 Week | 3 Weeks | 4 Weeks |
|---|---|---|---|---|
| | Release, grams/2 inches | | | |
| Comparison Example M (Bath A) | 53 | 75 | 145 | 168 |
| Example 19 | 38 | 45 | 58 | 60 |

The results presented in Table 4 indicate that both lower and more stable release are provided by the diluent solution containing the 3:1 weight ratio of 4-dodecylphenol:1,2-epoxydodecane.

Examples 20-30

Eleven 50 weight % solutions of (4-octyloxyphenyl)phenyl-iodoniumhexafluoroantimonate in a mixture containing a 3:1 weight ratio of 4-dodecylphenol:1,2-epoxydodecane were prepared. Ten of these solutions also contained photosensitizers at different concentrations (expressed as mole percent of the iodonium salt). 1 weight % of the resultant photocatalyst compositions were blended with a benzoate-ester-modified epoxy silicone, such as those taught in U.S. Patent No. 4,977, 198. Cure response was determined for 2-3 milligram samples of each catalyzed mixture using a Perkin-Elmer DSC-7 modified for isothermal photocalometric measurement. Determination of T peak (speed of cure response) and J/g (degree of cure) at 40°C were made. The results are shown in Table 5.

In Table 5, the term "IPTX" represents isopropylthioxanthone; "BMS" represents 4-benzoyl-4'-methyldiphenylsulfide; "BP" represents benzophenone "I-907" represents [4-(thiomethyl)phenyl]-(2,2'-methyl, morpholino)propanone; and "TBAQ" represents t-butylanthraquinone.

TABLE 5
Examples 20-30: Cure Response

| Example No. | Sensitizer | Mole % Sensitizer | T-Peak (minutes) | (J/gram) |
|---|---|---|---|---|
| 20 | IPTX | 0 | 1.436 | 41.87 |
| 21 | IPTX | 5 | 1.430 | 43.51 |
| 22 | IPTX | 10 | 1.391 | 46.38 |
| 23 | IPTX | 15 | 1.392 | 49.90 |
| 24 | IPTX | 20 | 1.382 | 47.26 |
| 25 | IPTX | 25 | 1.359 | 32.79 |
| 26 | BMS | 15 | 1.400 | 39.25 |
| 27 | BMS | 20 | 1.395 | 35.10 |
| 28 | BP | 15 | 1.576 | 40.26 |
| 29 | I-907 | 15 | 1.898 | 32.91 |
| 30 | TBAQ | 15 | 1.490 | 38.99 |

The best combination of cure speed and degree of cure was obtained with the use of 15 mole % of IPTX. Too high a photosensitizer concentration adversely affects performance by absorbing too much UV light and thereby preventing complete cure beneath the coating surface.

Example 30 and Comparison Example N

Example 30 and Comparative Example N illustrate the effect of IPTX on the stability of the release performance properties of a UV-curable epoxysilicone release coating composition containing an epoxysilicone and a photocatalyst solution containing $(C_{12}H_{25}Ph)_2ISbF_6$ and a 3:1 weight ratio mixture of 4-dodecylphenol:1,2-epoxydodecane.

A UV-curable epoxysilicone composition was prepared containing an epoxysilicone and a photocatalyst solution containing 45% by weight $(C_{12}H_{25}Ph)_2ISbF_6$ in a 3:1 weight ratio mixture of 4-dodecylphenol:1,2-epoxydodecane. A second UV-curable epoxysilicone composition was prepared which was identical to the first composition except that the second composition additionally contained 2.2 parts of IPTX per 100 parts of the remaining composition.

Cure and release comparisons of the two compositions were carried out using the pilot coater described hereinabove except that the James River 42 pound SCK substrate was coated at 0.95 pound/ream (1.5 g/m$^2$) coat weight, 400 fpm line speed. Two coating baths were prepared from the compositions described above. The first bath contained 100 parts of the epoxyfunctional silicone and 3 parts of the photocatalyst solution. The second coating bath contained 100 parts of the epoxyfunctional silicone, 3 parts of the photocatalyst solution, and 2.2 parts of the IPTX per 100 parts of the photocatalyst solution.

Release properties were measured in Example 30 and Comparative Example N in the same manner as described hereinbefore. The results are presented in Table 6.

TABLE 6
Example 30 and Comparative Example N:
Release Properties

| | Release, g/2 inches, 25°C aging | | | |
|---|---|---|---|---|
| Example No. | 1 day | 1 week | 2 weeks | 4 weeks |
| 30 | 38 | 85 | 120 | 220 |
| Comp. N | 38 | 75 | 78 | 115 |

The data presented in Table 6 indicate that the presence of the IPTX sensitizer causes a significant improvement in the stability of the release properties of the UV-curable epoxyfunctional silicone composition.

Examples 31-36 and Comparative Examples O-T

Twelve UV curable epoxysilicone baths were prepared. Each bath contained 100 parts of epoxysilicone polymer and a photocatalyst solution, the amount of the photocatalyst solution varying as indicated in Table 7 below. In Examples 31-36, the photocatalyst solution contained (i) 100 parts of a 45% solution of $(C_{12}H_{25}Ph)_2 ISbF_6$ in a 3:1 weight ratio mixture of 4-dodecylphenol and 1,2-epoxydodecane, and (ii) 2.2 parts of IPTX. In Comparative Examples O-T, the photocatalyst solution contained a 45% solution of $(C_{12}H_{25}Ph)_2ISbF_6$ in 2-ethyl-1,3-hexanediol. The baths were applied at various coat weights as indicated in Table 7 onto a supercalendered Kraft release liner at a constant line speed of 400fpm. Cure was effected by exposure to two banks of microwave fired Fusion Systems "H" bulbs as the UV source.

The initial release properties and the release properties after 4 weeks were measured and are presented in Table 7 below. The initial release properties are those measured upon formation of the laminate. Release is determined as grams/2 inches, 400 ipm pull at a 180° angle.

The substrate used in Examples 31-34 and Comparative Examples O-R was Nicolet RL 250 SCK. The substrate used in Example 35 and Comparative Example S was James River 42# SCK, and the substrate used in Example 36 and Comparative Example T was PEK.

TABLE 7
Examples 31-36 and Comparative Examples O-T:
Release Properties

| Example No. | % Catalyst | Coat Weight ($g/m^2$) | Initial * Release | Release After 4 Weeks (25°C) |
|---|---|---|---|---|
| Comp. O | 2 | 1.9 | 28 | 160 |
| 31 | 2 | 1.9 | 23 | 58 |
| Comp. P | 3 | 1.9 | 33 | 53 |
| 32 | 3 | 1.9 | 28 | 43 |
| Comp. Q | 3 | 1.4 | 35 | 168 |
| 33 | 3 | 1.4 | 33 | 33 |
| Comp. R | 3 | 0.85 | 50 | 500+ |
| 34 | 3 | 0.85 | 38 | 70 |
| Comp. S | 3 | 1.2 | 53 | 500+ |
| 35 | 3 | 1.2 | 35 | 118 |
| Comp. T | 1 | 1.0 | 38 | 33 |
| 36 | 1 | 1.0 | 33 | 33 |

* Release is reported as gram/2 inch tape, 400 ipm at 180°C angle.

The combination of IPTX sensitizer with a photocatalyst solution containing a 45% solution of $(C_{12}H_{25}Ph)_2ISbF_6$ in a 3:1 weight ratio mixture of 4-dodecylphenol and 1,2-epoxydodecane provided significant improvement in the overall performance of the epoxysilicone release coatings, particularly on paper substrates at low coat weights.

Examples 37-42 and Comparative Examples U-W

Nine UV curable epoxysilicone baths were prepared. Each bath contained 100 parts of epoxysilicone polymer and a photocatalyst solution, the amount of the photocatalyst solution varying as indicated in Table 8 below. In Examples 37-42, the photocatalyst solution contained (i) 100 parts of a 45% solution of $(C_{12}H_{25}Ph)_2ISbF_6$ in a 3:1 weight ratio mixture of 4-dodecylphenol and 1,2-epoxydodecane, and (ii) 2.2 parts of IPTX. In Comparative Examples U-W, the photocatalyst solution contained a 45% solution of $(C_{12}H_{25}Ph)_2ISbF_6$ in 2-ethyl-1,3-hexanediol. The baths were applied at various coat weights as indicated in Table 8 onto various substrates at a constant line speed of 400 feet per minute (fpm). Cure was effected by exposure to two banks of microwave fired 375 watts/inch "H" bulbs as the UV source.

The initial release properties and the release properties after 4 weeks were measured and are presented in Table 8 below. The initial release properties are those measured upon formation of the laminate. Release is determined as grams/2 inches, 400 ipm pull at 180°C.

TABLE 8:
Examples 37-42 and Comparative Examples U-W:
Release Properties

| Example No. | % Catalyst | Substrate | Coat Weight (g/m²) | Initial Release | Release After 4 Weeks |
|---|---|---|---|---|---|
| U | 3 | Glassine* | 0.8 | 48 | 225 |
| 37 | 2 | Glassine* | 0.8 | 38 | 60 |
| 38 | 3 | Glassine* | 0.96 | 38 | 48 |
| V | 3 | CCK** | 1.1 | 48 | 130 |
| 39 | 2 | CCK** | 1.1 | 48 | 45 |
| 40 | 3 | CCK** | 1.1 | 55 | 55 |
| W | 3 | CCK*** | 1.1 | 85 | 500+ |
| 41 | 2 | CCK*** | 1.1 | 70 | 88 |
| 42 | 3 | CCK*** | 1.1 | 65 | 78 |

* Kammerer Glassnine
** Lohja (Finland) Clay-Coated Kraft
*** American Coating Technologies V-2500 Clay-Coated Kraft

The results shown in Table 8 illustrate that the improved photocatalyst composition of the present invention in combination with the IPTX sensitizer causes a significant and unexpected improvement in the release performance of the UV cured epoxysilicone compositions.

## Claims

1. A photocatalyst composition for use in UV-curable epoxysilicone compositions, comprising by weight:
(a) from about 10 to about 90 parts of a bis(aryl)iodonium salt photocatalyst having the following formula

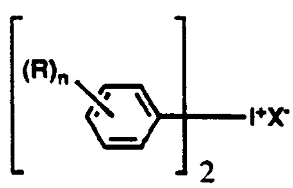

wherein X is selected from the group consisting of $SbF_6$, $AsF_6$, $PF_6$, and $BF_4$, and wherein R is a $C_{(4-20)}$ organo radical selected from the group consisting of alkyl and haloalkyl radicals and mixtures thereof and n is a whole number equal to 1 to 5 inclusive; and
(b) from about 10 to about 90 parts of a reactive diluent comprising an organic phenol having the general formula

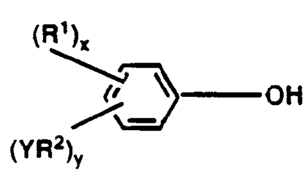

wherein $R^1$ is a monovalent non-aromatic organic radical; $R^2$ is a divalent non-aromatic organic radical; Y is a radical selected from halogens. hydroxy radicals, oxiranyl radicals, or mercaptan radicals; "x" is

a number in the range of from 1 to 5; "y" is a number in the range of from 0 to 4; the sum of "x"+"y" being 5, and the sum of (a) and (b) being 100 parts.

2. A composition according to Claim 1 wherein the reactive diluent (b) further comprises an epoxyfunctional organic compound having from about 4 to about 20 carbon atoms and at least one epoxy radical, the epoxyfunctional organic compound being present in an amount sufficient to provide a weight ratio of organic phenol to epoxyfunctional organic compound of 9:1 to 1:9.

3. A composition according to Claim 1 or Claim 2 further comprising (c) from about 0.1 to about 25 parts per 100 parts of (a) and (b) of a photosensitizer which is a benzophenone or diaryl ketone derivative thereof.

4. A composition according to any preceding claim wherein $R^1$ is an alkyl radical having from about 3 to about 20 carbon atoms, x is 1, and y is 0.

5. A composition according to any preceding claim wherein the organic phenol is 4-dodecylpohenol and has the formula

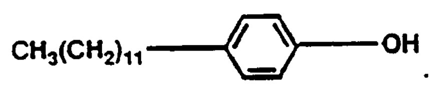

6. A composition according to any one of Claims 2 to 5 wherein the epoxyfunctional organic compound is an epoxy-chainstopped alkyl having from about 6 to about 18 carbon atoms.

7. A photocatalyst composition for use in UV-curable epoxysilicone compositions, comprising by weight:
(a) from about 5 to about 90 parts of a polyarylonium hexafluorometal. or metalloid salt, substituted with at least one nuclear bound alkoxy radical having at least 8 carbon atoms selected from the class consisting of diaryliodonium salts and triarylsulfonium salts; and
(b) from about 10 to about 95 parts of a reactive diluent comprising
(i) an organic phenol having the general formula

(II)

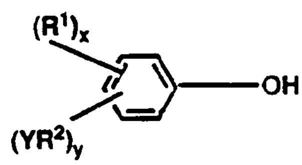

wherein $R^1$ is a monovalent non-aromatic organic radical; $R^2$ is a divalent non-aromatic organic radical; Y is a radical selected from halogens, hydroxy radicals, oxiranyl radicals, or mercaptan radicals; "x" is a number in the range of from 1 to 5; "y" is a number in the range of from 0 to 4; the sum of "x"+"y" being 5, and the sum of (a) and (b) being 100 parts; and
(ii) an epoxyfunctional organic compound having from about 4 to about 20 carbon atoms and at least one epoxy radical, the epoxyfunctional organic compound being present in an amount sufficient to provide a weight ratio of organic phenol to epoxyfunctional organic compound of 9:1 to 1:9, the sum of (a) and (b) being 100 parts; and
(c) from about 0.1 to about 25 parts per 100 parts of (a) and (b) of a photosensitizer which is a benzophenone or diaryl ketone derivative thereof.

8. A composition according to claim 9 wherein the polyarylonium salt is (4-octyloxyphenyl)phenyliodoniumhexafluoroantimonate.

9. An ultraviolet-curable epoxysilicone composition comprising by weight:
(A) 100 parts of an epoxy-functional dialkylepoxy-chainstopped polydialkyl-alkyl epoxy siloxane copolymer having an epoxy equivalent weight of 1000 or above and a viscosity of from about 10 to about 10,000 centipoise at 25°C; and
(B) from about 0.5 to about 5.0 parts of a photocatalyst composition, comprising by weight:

(a) from about 10 to about 90 parts of a bis(aryl)iodonium salt photocatalyst having the following formula

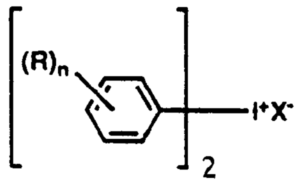

wherein X is selected from the group consisting of $SbF_6$, $AsF_6$, $PF_6$, and $BF_4$ and wherein R is a $C_{(4-20)}$ organo radical selected from the group consisting of alkyl and haloalkyl radicals and mixtures thereof and n is a whole number equal to 1 to 5 inclusive; and

(b) from about 10 to about 90 parts of a reactive diluent comprising an organic phenol having the general formula

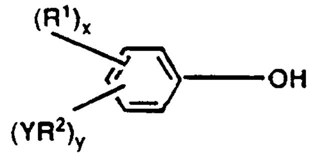

wherein $R^1$ is a monovalent non-aromatic organic radical; $R^2$ is a divalent non-aromatic organic radical; Y is a radical selected from halogens, hydroxy radicals, oxiranyl radicals, or mercaptan radicals; "x" is a number in the range of from 1 to 5; "y" is a number m the range of from 0 to 4; the sum of "x"+"y" being 5. and the sum of (a) and (b) being 100 parts.

**10.** An ultraviolet-curable epoxysilicone composition consisting essentially of by weight:

(A) 100 parts of an epoxy-functional dialkylepoxy-chainstopped polydialkyl-alkyl epoxy siloxane copolymer having an epoxy equivalent weight of 1000 or above and a viscosity of from about 10 to about 10,000 centipoise at 25°C; and

(B) from about 0.5 to about 5.0 parts of a photocatalyst composition, consisting essentially of by weight:

(a) from about 5 to about 90 parts of a polyarylonium hexafluorometal, or metalloid salt, substituted with at least one nuclear bound alkoxy radical having at least 8 carbon atoms selected from the class consisting of diaryliodonium salts and triarylsulfonium salts;

(b) from about 10 to about 95 parts of a reactive diluent comprising

(i) an organic phenol having the general formula

(II)

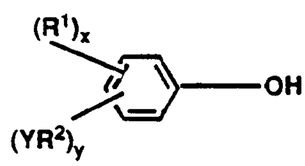

wherein $R^1$ is a monovalent non-aromatic organic radical; $R^2$ is a divalent non-aromatic organic radical; Y is a radical selected from halogens, hydroxy radicals, oxiranyl radicals, or mercaptan radicals; "x" is a number in the range of from 1 to 5; "y" is a number in the range of from 0 to 4; the sum of "x"+"y" being 5; and

(ii) an epoxyfunctional organic compound having from about 4 to about 20 carbon atoms and at least one epoxy radical, the epoxyfunctional organic compound being present in an amount sufficient to provide a weight ratio of organic phenol to epoxyfunctional organic compound of 9:1 to 1:9, the sum of (a) and (b) being 100 parts; and

(c) from about 0.1 to about 25 parts per 100 parts of (a) and (b) of a photosensitizer which is a benzophenone or diaryl ketone derivative thereof.